# EUROPEAN PATENT APPLICATION

(11) **EP 3 772 831 A1**
(43) Date of publication of application: **10.02.2021**
(21) Application number: 20189912.7
(22) Date of filing: 06.08.2020
(51) Int. Cl.: H04J 14/06

(54) **SYSTEM AND METHOD FOR OPTICAL POLARIZATION DIVISION MULTIPLEXING**

(30) Priority: 06.08.2019 US 201916532620
(71) Applicant: Rockwell Collins, Inc., Cedar Rapids, IA 52498 (US)
(72) Inventor: ESMAN, Daniel J., Columbia, Maryland 21044 (US)
(74) Representative: Dehns

(57) **Abstract**

A system is provided for transmitting signals using circular polarization division multiplexing includes a polarization beam combiner configured to combine a first signal (301a) and a second signal (301b) into a composite signal (303), wherein the first signal is polarized along a first linear polarization, and the second signal is polarized along a second linear polarization. The system may further include a first wave plate (310) configured to receive the composite signal and generate a circularly-polarized composite signal. The system may further include a communicative coupling (306) configured to transmit the circularly-polarized composite signal, and a second wave plate (312) configured to receive the circularly-polarized composite signal and generate a linearly-polarized composite signal. The system may further include a polarization beam splitter (308) configured to receive the linearly-polarized composite signal via a first input port, transmit the first signal via a first output line, and transmit the second signal via a second output line.

## Description

### BACKGROUND

In order to transmit multiple signals, multiple sets of signals are often multiplexed and transmitted over a single line, such as a fiber optic cable. However, multiplexing two or more signals of the same wavelength onto a single fiber while simultaneously maintaining the relative delay, phase, power, and polarization between each respective signal is extremely difficult. For example, conventional time division multiplexing (TDM) techniques for pulsed signals exhibit high environmental stability (e.g., low temperature dependence), but suffer from high optical loss and high electrical power requirements to perform signal de-multiplexing. By way of another example, conventional linear polarization division multiplexing (LPDM) techniques exhibit low optical loss and require no external power, but suffer from extreme environmental dependencies. Therefore, there exists a need in the art for a system and method which cure one or more of the shortfalls of previous approaches identified above.

### SUMMARY

A system for transmitting signals using circular polarization division multiplexing is disclosed. In embodiments, the system includes a polarization beam combiner configured to combine a first signal and a second signal into a composite signal, wherein the composite signal includes the first signal polarized along a first linear polarization, and the second signal polarized along a second linear polarization. The system may further include a first wave plate configured to receive the composite signal from the polarization beam combiner and adjust a polarization of the composite signal to generate a circularly-polarized composite signal. The system may further include a communicative coupling configured to transmit the circularly-polarized composite signal, and a second wave plate configured to receive the circularly-polarized composite signal and adjust a polarization of the circularly-polarized composite signal to generate a linearly-polarized composite signal. The system may further include a polarization beam splitter configured to receive the linearly-polarized composite signal via a first input port, transmit the first signal via a first output line, and transmit the second signal via a second output line.

A method for transmitting signals using circular polarization division multiplexing is disclosed. In embodiments, the method includes: combining a first signal and a second signal into a composite signal with a polarization beam combiner; adjusting, with a first quarter-wave plate, a polarization of the composite signal to generate a circularly-polarized composite signal; transmitting the circularly-polarized composite signal with a communicative coupling; adjusting, with a second quarter-wave plate, a polarization of the circularly-polarized composite signal to generate a linearly-polarized composite signal; and splitting the linearly-polarized composite signal into the first signal with a first linear polarization and the second signal with a second linear polarization with a polarization beam splitter.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are provided for example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a system for transmitting pulsed signals using time division multiplexing (TDM).
FIG. 1B illustrates a system for transmitting signals using linear polarization division multiplexing (LPDM).
FIG. 2 illustrates a conceptual view of two pulsed signals transmitted using linear polarization division multiplexing (LPDM).
FIG. 3 illustrates a conceptual view of a system for transmitting signals using circular polarization division multiplexing (CPDM), in accordance with one or more embodiments of the present disclosure.
FIG. 4 illustrates a conceptual view of two pulsed signals transmitted using circular polarization division multiplexing (CPDM), in accordance with one or more embodiments of the present disclosure.
FIG. 5 illustrates a graph depicting temperature dependent delays induced using linear polarization division multiplexing (LPDM) and circular polarization division multiplexing (CPDM), in accordance with one or more embodiments of the present disclosure.
FIG. 6 illustrates a flowchart of a method for transmitting signals using circular polarization division multiplexing (CPDM), in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

Multiple sets of signals are often multiplexed and transmitted over a single line, such as a fiber optic cable. However, multiplexing two or more signals of the same wavelength onto a single fiber while simultaneously maintaining the relative delay, phase, power, and polarization between each respective signal is extremely difficult. In particular, conventional time division multiplexing (TDM) techniques for pulsed signals suffer from high optical loss and high electrical power requirements, and conventional linear polarization division multiplexing (LPDM) techniques suffer from extreme environmental dependencies.

Accordingly, embodiments of the present disclosure are directed to a system and method which cure one or more of the shortfalls of previous approaches identified above. Embodiments of the present disclosure are directed to a system and method for transmitting multiple signals using circular polarization division multiplexing (CPDM). In particular, embodiments of the present disclosure are directed to a system and method for multiplexing two signals onto orthogonal circular polarizations and transmitting the signals over a circular polarization-maintaining (CPM) fiber.

It is contemplated herein that embodiments of the present disclosure may enable transmission of multiple signals over a single communicative coupling while reducing optical loss and eliminating electrical power requirements. Furthermore, embodiments of the present disclosure may enable signal transmission with low environmental dependencies. In particular, it is contemplated herein that CPDM techniques of the present disclosure may enable long-distance signal transmission which is not susceptible to temperature-dependent delay.

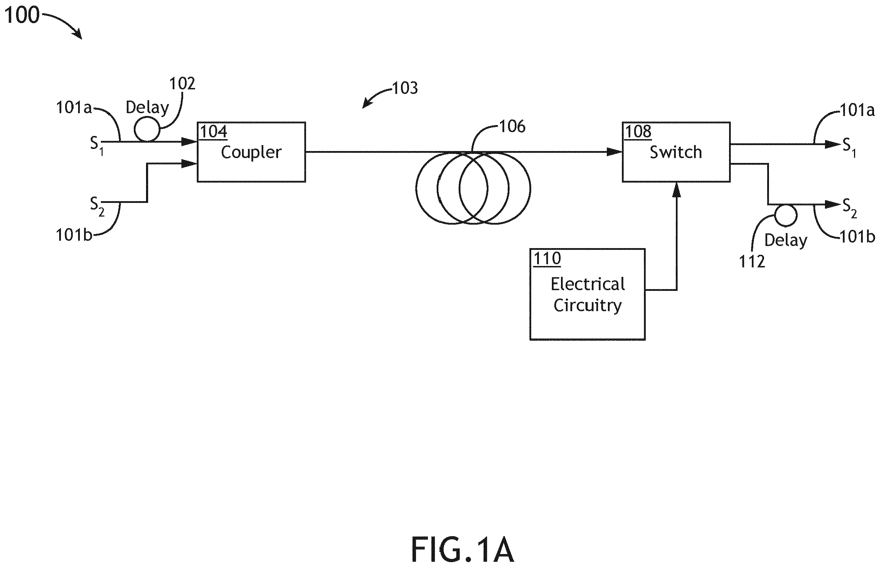

FIG. 1A illustrates a system 100 for transmitting signals using time division multiplexing (TDM). In particular, the system 100 depicted in FIG. 1A is shown as an example communication system for optical signal multiplexing according to conventional TDM techniques. It is contemplated herein that a brief description of the system 100 may provide a reference point against which attendant advantages of the present disclosure may be compared.

Using conventional TDM techniques in system 100, a first signal 101a (*S*₁) and a second signal 101b (*S*₂) are combined (e.g., multiplexed) into a single composite signal 103 with a coupler 104. For example, the first signal 101a and the second signal 101b may include pulsed signals with a single polarization. The coupler 104 may multiplex the two pulsed signals to generate a composite signal 103 such that the composite signal 103 includes each of the pulsed first signal 101a and the pulsed second signal 101b.

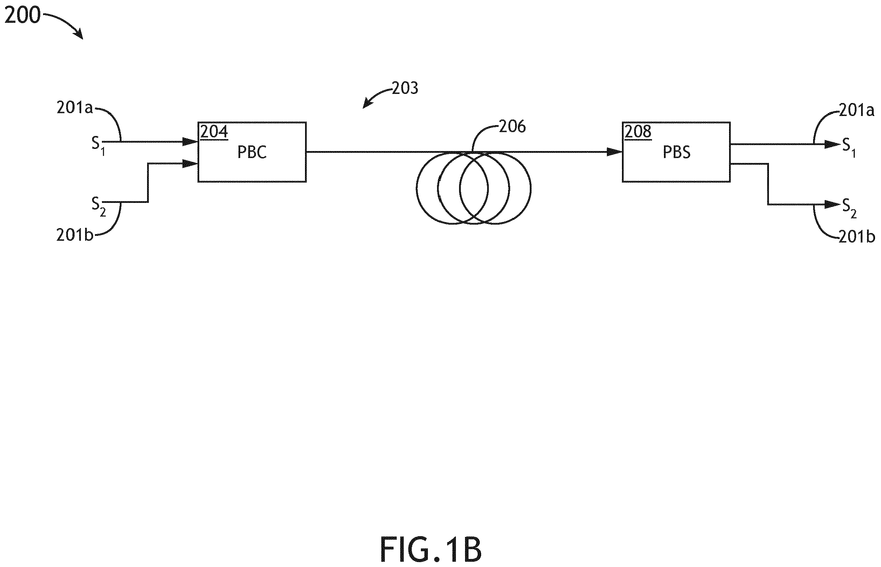

With time division multiplexing (TDM), a known time delay 102 may be induced into the first signal 101a or the second signal 101b. For example, as shown in FIG. 1, a known time delay 102 may be induced into the first signal 101a prior to multiplexing within the coupler 104. With traditional TDM, multiplexing within the coupler 104 typically results in approximately 3 dB of power loss, thereby increasing the power requirements of the system 100 and decreasing the overall efficiency of the system 100.

The composite signal 103 may be transmitted over a polarization-maintaining fiber 106 (e.g., fiber optic cable) to an optical switch 108. The optical switch 108 may be communicatively coupled to high-frequency electrical circuitry 110 including an electrical power source in order to carry out de-multiplexing. In this regard, the optical switch 108 may be configured to receive the composite signal 103 via an input port, and de-multiplex the composite signal 103 in order to output the first signal 101a on a first output port and output the second signal 101b on a second output port. As shown in FIG. 1, system 100 may induce a known time delay 112 into the second signal 101b.

It is noted herein that de-multiplexing within the optical switch 108 of system 100 requires operation of the high-frequency electrical circuitry 110, and typically results in approximately 5 dB of power loss, further decreasing the overall efficiency of system 100. Furthermore, system 100 typically exhibits high optical losses (e.g., optical power difference between signals input to coupler 104 and signals output from switch 108). This high optical loss and large electrical power requirements render the time-division multiplexing (TDM) techniques of system 100 ill-suited to carry out signal transmissions in many contexts.

FIG. 1B illustrates a system 200 for transmitting signals using linear polarization division multiplexing (LPDM). In particular, the system 200 depicted in FIG. 1B is shown as an example communication system for optical signal multiplexing according to conventional LPDM techniques. It is contemplated herein that a brief description of the system 200 may provide a reference point against which attendant advantages of the present disclosure may be compared.

Using conventional LPDM techniques in system 200, a first signal 201a (*S*₁) and a second signal 201b (*S*₂) are combined (e.g., multiplexed) into a single composite signal 203 with a polarization beam combiner (PBC 204). For example, the first signal 201a and the second signal 201b may include pulsed signals. The PBC 204 may combine/multiplex the two pulsed signals to generate a composite signal 203 such that the composite signal 203 includes each of the pulsed first signal 201a and the pulsed second signal 201b. Utilizing LPDM, the PBC 204 may be configured to multiplex the two pulsed signals (e.g., first signal 201a, second signal 201b) onto two orthogonal linear polarizations.

The composite signal 203 may be transmitted over a polarization-maintaining fiber 206 to a polarization beam splitter (PBS 208). The PBS 208 may be configured to carry out de-multiplexing. In this regard, the PBS 208 may be configured to receive the composite signal 203 via an input port, and split/de-multiplex the composite signal 203 in order to output the first signal 201a via a first output port and output the second signal 201b via a second output port.

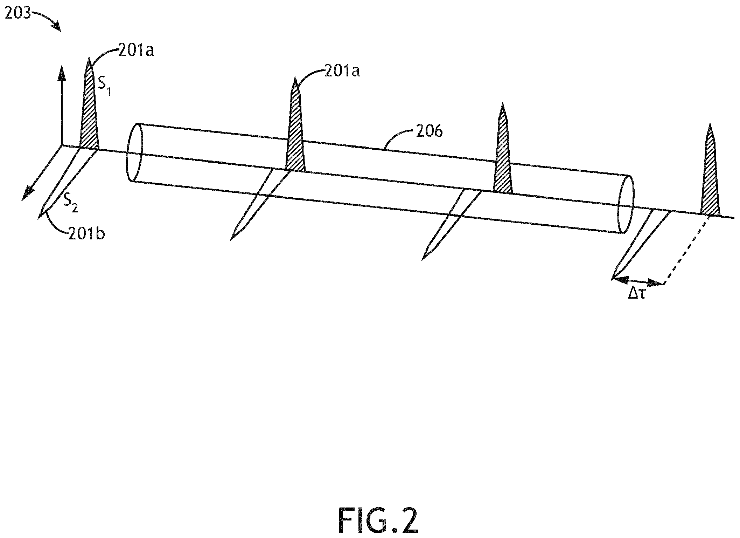

Compared with TDM techniques of system 100, which require external electrical energy and result in power losses, combining and splitting via PBC 206 and PBS 208 utilizing LPDM techniques of system 200 may be carried out passively (e.g., without external electrical energy). Additionally, utilizing LPDM techniques of system 200 leads to low power loss multiplexing and de-multiplexing. However, LPDM techniques of system 200 suffer from extreme environmental dependencies. In particular, temperature-dependent delays between the first signal 201a and the second signal 201b within the composite signal 203 limit the effective and/or feasible length of the polarization-maintaining fiber 206. This may be further understood with reference to FIG. 2.

FIG. 2 illustrates a conceptual view of two pulsed signals transmitted using linear polarization division multiplexing (LPDM). In particular, FIG. 2 illustrates a temperature-dependent differential delay (Δ*τ*) induced between the first signal 201a and the second signal 201b within the polarization-maintaining fiber 206 utilizing LPDM techniques of system 200.

As may be seen in FIG. 2, utilizing linear polarization division multiplexing (LPDM), a first pulsed signal 201a and a second pulsed signal 201b may be combined into a single composite signal 203, wherein the first signal 201a and the second signal 201b are linearly orthogonally polarized. For example, the first signal 201a may be polarized along a first linear polarization, and the second signal 201b may be polarized along a second linear polarization orthogonal to the first linear polarization.

The composite signal 203 may be transmitted from the PBC 206 to the PBS 208 via a polarization-maintaining fiber 206. As the composite signal 203 is transmitted through the polarization-maintaining fiber 206, the respective signals (e.g., first signal 201a, second signal 201b) of the composite signal 203 may be affected/delayed to varying extents due to the birefringence of the polarization-maintaining fiber 206. It is noted herein that birefringence is an optical property of a material having a refractive index which is dependent upon the polarization and propagation direction of the light and/or signals transmitted through the material. Accordingly, due to the orthogonal polarizations of the first signal 201 a and the second signal 201 b, the signals will propagate through the polarization-maintaining fiber 206 at varying rates, thereby inducing a differential delay (Δ*τ*) between the first signal 201a and the second signal 201b.

It is noted herein that the differential delay (Δ*τ*) induced between the first signal 201a and the second signal 201b may be dependent upon the length of the polarization-maintaining fiber 206. In particular, longer lengths of polarization-maintaining fiber 206 will result in larger differential delays. This limits the ability of system 200 to maintain signal parameters (e.g., delay, phase, power) during transmission through the polarization-maintaining fiber 206, and thereby limits the theoretical length that the composite signal 203 may be transmitted through the polarization-maintaining fiber 206.

It is further noted herein that the birefringence of a material (e.g., polarization-maintaining fiber 206) is highly dependent upon the temperature of the material (e.g., temperature of the polarization-maintaining fiber 206). In this regard, the magnitude of differential delay (Δ*τ*) induced between the first signal 201a and the second signal 201b is highly dependent upon the temperature of the polarization-maintaining fiber 206 as a whole, as well as temperature gradients across the length of the polarization-maintaining fiber 206. In this regard, longer lengths of polarization-maintaining fiber 206 may lead to larger temperature gradients, and increased uncertainty as to the differential delay (Δ*τ*) induced between the first signal 201a and the second signal 201b. Taken together, the temperature-dependent birefringence and unpredictable differential delay (Δ*τ*) drastically limits the distance over which composite signals 203 may be transmitted in system 200.

Accordingly, embodiments of the present disclosure are directed to a system and method for transmitting multiple signals using circular polarization division multiplexing (CPDM). It is contemplated herein that embodiments of the present disclosure may increase the maximum link length across which signals may be transmitted, while simultaneously lowering power requirements, lowering optical loss, and decreasing temperature dependence.

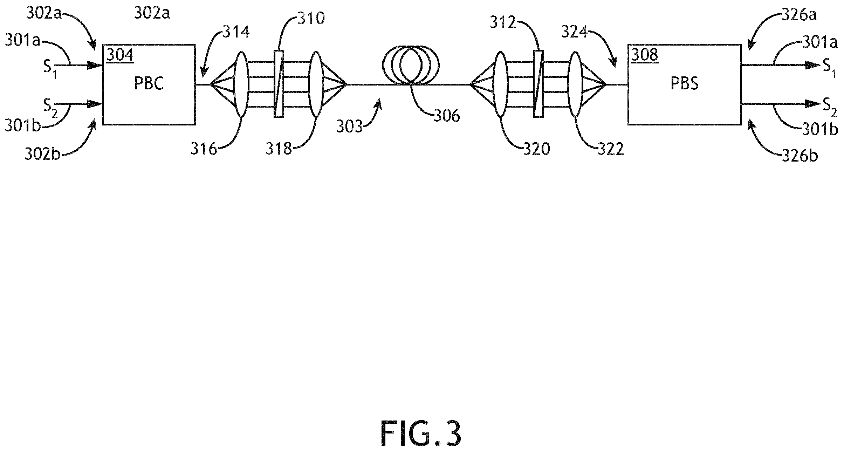

FIG. 3 illustrates a conceptual view of a system 300 for transmitting signals using circular polarization division multiplexing (CPDM), in accordance with one or more embodiments of the present disclosure. The system 300 may include, but is not limited to, a polarization beam combiner (PBC 304), a circular polarization-maintaining communicative coupling (CPM communicative coupling 306), a polarization beam splitter (PBS 308), a first wave plate 310, and a second wave plate 312.

In embodiments, the polarization beam combiner (PBC 304) may be configured to receive a first signal 301a via a first input port 302a, and a second signal 301b via a second input port 302b. It is contemplated herein that system 300 may be used in a wide variety of contexts, and may be used to transmit many different types of signals. For example, system 300 may be utilized in the context of remote sampling, self-homodyne optical links, and the like. For instance, system 300 may be utilized in the context of remote sampling in order to sample signals at remote locations and transmit sampled signals to base stations or other devices where the sampled signals may be processed. In this regard, the first signal 301a and the second signal 301b may include any signal known in the art including, but not limited to, pulsed signals, sampled signals, continuous wave (CW) signals, and the like.

The PBC 304 may be configured to combine/multiplex the first signal 301a and the second signal 301b into a composite signal 303 which is transmitted via an output port 314. In embodiments, the PBC 304 may be configured to polarize the first signal 301a and the second signal 301 b within the composite signal 303 in varying linear polarizations. For example, the PBC 304 may generate the composite signal 303 including the first signal 301a and the second signal 301b such that the first signal 301a is polarized along a first linear polarization, and the second signal 301b is polarized along a second linear polarization different from the first linear polarization. In some embodiments, the PBC 304 may polarize the signals within composite signal 303 such that the first signal 301a and the second signal 301b are polarized along linear polarizations which are orthogonal to one another (e.g., s-polarization, p-polarization).

In embodiments, the PBC 304 may include a passive combinerwhich is configured to combine multiple signals (e.g., first signal 301a, second signal 301b) into a single composite signal 303 without the use of external electrical power. It is noted herein that performing combining with a passive combiner (e.g., PBC 304) may enable lower loss multiplexing than is achievable using conventional techniques (e.g., TDM in system 100).

In embodiments, the PBC 304 may output the composite signal 303 via the output port 314 and direct the composite signal 303 to a collimator 316. The composite signal 303 may be transmitted from the PBC 304 to the collimator 316 using any signal transmission technique known in the art including, but not limited to, fiber optic cables. The collimator 316 may collimate the composite signal 303 and direct the linearly-polarized composite signal 303 to the first wave plate 310. In embodiments, the first wave plate 310 may be configured to receive the linearly-polarized composite signal 303 and adjust a polarization of the linearly-polarized composite signal 303 to generate a circularly-polarized composite signal 303. In this regard, the wave plate 310 may include any wave plate or optical element known in the art configured to convert linear polarization into circular polarization including, but not limited to, a quarter-wave plate. The wave plate 310 may then be configured to direct the circularly-polarized composite signal 303 to an additional collimator 318 configured to collimate the circularly-polarized composite signal 303.

It is noted herein that the wave plate 310 may convert orthogonal linear polarizations within the linearly-polarized composite signal 303 into orthogonal circular polarizations within the circularly-polarized composite signal 303. For example, a linearly-polarized composite signal 303 may include a first signal 301a polarized along a first linear polarization and a second signal 301b polarized along a second linear polarization orthogonal to the first linear polarization. In this example, the wave plate 310 may be configured to convert the linearly-polarized composite signal 303 and generate a circularly-polarized composite signal 303, wherein the circularly-polarized composite signal 303 includes a first signal 301a polarized along a first circular polarization and a second signal 301b polarized along a second circular polarization which is orthogonal to the first circular polarization.

In embodiments, the circularly-polarized composite signal 303 may then be transmitted through a circular polarization-maintaining communicative coupling 306 (CPM communicative coupling 306). It is noted herein that the CPM communicative coupling 306 may include any communicative coupling configured to transmit signals while maintaining a circular polarization of the transmitted signals. For example, the CPM communicative coupling 306 may include a CPM fiber 306. For instance, the CPM fiber 306 may include a spun CPM fiber 306.

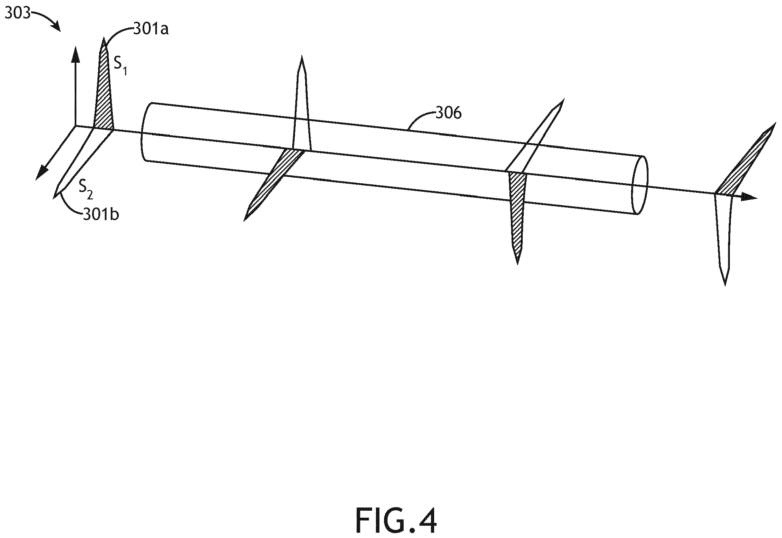

As noted previously herein, birefringence is an optical property of a material having a refractive index which is dependent upon the polarization and propagation direction of the light and/or signals transmitted through the material. Accordingly, birefringence causes signals with varying polarizations to propagate through the material at varying speeds. In the context of LPDM, the orthogonal linear polarizations of a first signal 201a and a second signal 201b are maintained throughout the polarization-maintaining fiber 206, resulting in a differential delay (Δ*τ*) induced between the first signal 201a and the second signal 201b, as previously shown in FIG. 2. Comparatively, with differing circular polarizations, the first signal 301a and the second signal 301b in system 300 may each rotate between fundamental modes within the CPM fiber 306, thereby eliminating any differential delay (Δ*τ*) induced between the first signal 301a and the second signal 301b. This may be further understood with reference to FIG. 4.

FIG. 4 illustrates a conceptual view of two pulsed signals transmitted using circular polarization division multiplexing (CPDM), in accordance with one or more embodiments of the present disclosure.

As may be seen in FIG. 4, each of the first signal 301a and the second signal 301b of the composite signal 303 may rotate between fundamental modes as the composite signal 303 is transmitted through the CPM fiber 306. By using a CPM fiber 306, each signal 301a, 301b will maintain its respective circular polarization throughout the length of the CPM fiber 306. Although temperature-dependent birefringence of the CPM fiber 306 may affect each of the first signal 301a and the second signal 301b differently at particular moments in time, the overall effect of the birefringence will be averaged across the length of the CPM fiber 306, resulting in equivalent (or approximately equivalent) delays being induced in the first signal 301a and the second signal 301b. For example, due to the birefringence of the CPM fiber 306, a first delay (*τ*₁) may be induced in the first signal 301a, and a second delay (*τ*₂) may be induced in the second signal 301b. In this example, the effect of the birefringence is averaged across the length of the CPM fiber 306 between the two signals 301a, 301b, such that the induced delays are equal and Δ*τ* = *τ*₂ - *τ*₁ = 0.

Accordingly, it is contemplated herein that system 300 of the present disclosure may utilize circular polarization division multiplexing (CPDM) in order to reduce and/or eliminate differential delay (Δ*τ*) induced between the first signal 301a and the second signal 301b. By reducing and/or eliminating induced differential delay (Δ*τ*), system 300 may significantly reduce temperature dependence of differential delay between signals, thereby improving environmental stability during long-distance signal transmissions.

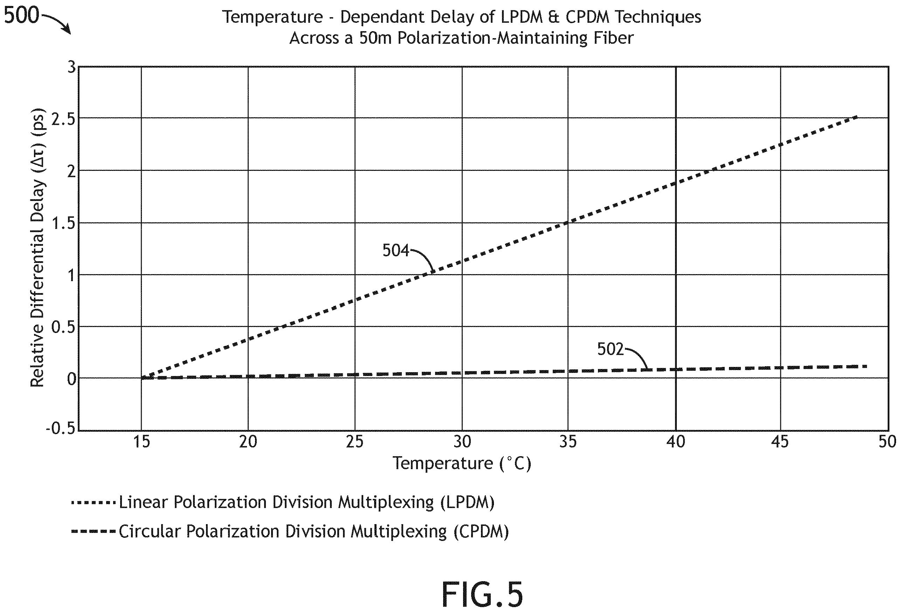

FIG. 5 illustrates a graph 500 depicting temperature dependent delays experienced using linear polarization division multiplexing (LPDM) and circular polarization division multiplexing (CPDM), in accordance with one or more embodiments of the present disclosure.

In particular, curve 502 of graph 500 depicts temperature-dependent delay of circular polarization division multiplexing (CPDM) across a 50-meter fiber. Conversely, curve 504 of graph 500 depicts temperature-dependent delay of linear polarization division multiplexing (LPDM) across a 50-meter fiber. In this regard, curve 502 represents temperature-dependent delay within a 50-meter CPM fiber 306 of system 300, and curve 504 represents temperature-dependent delay within a 50-meter polarization-maintaining fiber 206 of system 200.

As may be seen in graph 500, as the temperature of the 50-meter fiber (e.g., polarization-maintaining fiber 206, CPM fiber 306) increases, the temperature-dependent delay of LPDM in system 200 (curve 504) substantially increases, whereas the temperature-dependent delay of CPDM in system 300 (curve 502) remains approximately constant. For example, as shown by curve 504, a 50-meter polarization-maintaining fiber 206 within system 200 using LPDM techniques may exhibit approximately 2.5 ps of differential delay (e.g., Δ*τ* = 2.5 ps). This induced differential delay may drastically increase with increased transmission distance (e.g., increased length of polarization-maintaining fiber 206) and/or rising temperatures.

Conversely, as shown by curve 502, a 50-meter CPM fiber 306 within system 300 using CPDM techniques may exhibit approximately 0.2 ps of differential delay (e.g., Δ*τ* = 0.2 ps). This marks a significant improvement in environmental stability using CPDM of system 300, thereby enabling more efficient and reliable signal transmission across longer distances (e.g., longer CPM fiber 306 lengths) and a range of temperatures.

Reference will again be made to FIG. 3. In embodiments, the CPM fiber 306 may direct the circularly-polarized composite signal 303 to a collimator 320. The collimator 320 may be configured to collimate the circularly-polarized composite signal 303 and direct the circularly-polarized composite signal 303 to a second wave plate 312. In embodiments, the second wave plate 312 may be configured to receive the circularly-polarized composite signal 303 and adjust a polarization of the circularly-polarized composite signal 303 to generate a linearly-polarized composite signal 303.

In embodiments, the second wave plate 312 may be configured to linearly polarize the first signal 301a and the second signal 301b along linear polarizations which are equivalent to the linear polarizations of the first signal 301a and the second signal 301b within the linearly-polarized composite signal 303 generated by the PBC 304. For example, the PBC 304 may generate a linearly-polarized composite signal 303 including the first signal 301a polarized along a first linear polarization and the second signal 301b polarized along a second linear polarization orthogonal to the first linear polarization. Subsequently, the wave plate 312 may be configured to receive a circularly-polarized composite signal 303 and adjust a polarization of the circularly-polarized composite signal 303 to generate a linearly-polarized composite signal 303 including the first signal 301a polarized along a third linear polarization and the second signal 301b polarized along a fourth linear polarization, wherein the third linear polarization is equivalent to the first linear polarization and the fourth linear polarization is equivalent to the second linear polarization.

It is noted herein that the second wave plate 312 may include any wave plate or optical element known in the art configured to convert circular polarization into linear polarization including, but not limited to, a quarter-wave plate. The second wave plate 312 may then be configured to direct the linearly-polarized composite signal 303 to an additional collimator 322 configured to collimate the linearly-polarized composite signal 303.

In embodiments, the collimator 322 may be configured to direct the linearly-polarized composite signal 303 to a polarization beam splitter (PBS 308). In embodiments, the PBS 308 is configured to receive the linearly-polarized composite signal 303 via a first input port 324 and split (e.g., de-multiplex) the received linearly-polarized composite signal 303 into the first signal 301a and the second signal 301b. Accordingly, the PBS 308 may be configured to transmit the first signal 301a via a first output port 326a, and may be further configured to transmit the second signal 301b via a second output port 326b.

It is contemplated herein that embodiments of the present disclosure may increase the maximum link length across which signals may be transmitted. For example, it has been found that CPDM techniques of system 300 may enable transmission of signals across a CPM fiber 306 greater than 200 meters in length before the differential delay reaches 1 ps over a 70°C temperature change. Additionally, it has been found that system 300 may enable increased signal transmission range while maintaining low optical loss (e.g., under 5 dB), while requiring no external power for multiplexing or de-multiplexing functions. Furthermore, system 300 has been found to maintain high performance across a large temperature range.

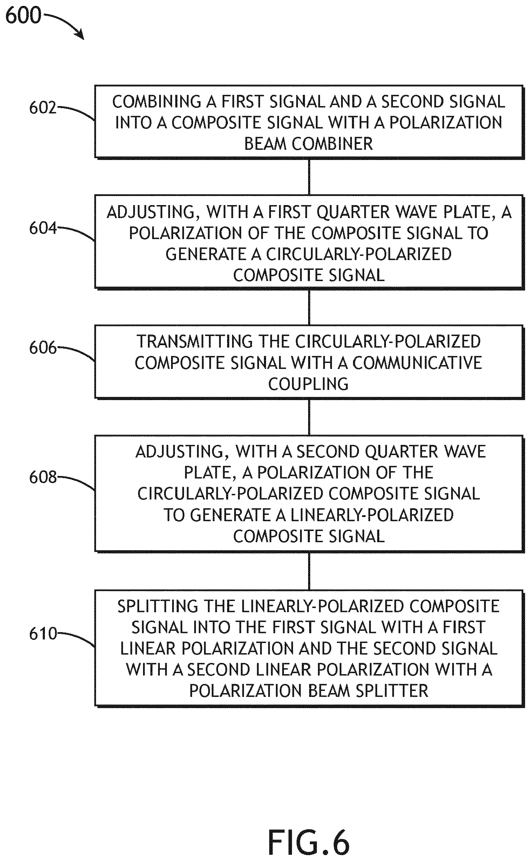

FIG. 6 illustrates a flowchart of a method 600 for transmitting signals using circular polarization division multiplexing, in accordance with one or more embodiments of the present disclosure. It is noted herein that the steps of method 600 may be implemented all or in part by system 300. It is further recognized, however, that the method 600 is not limited to the system 300 in that additional or alternative system-level embodiments may carry out all or part of the steps of method 600.

In a step 602, a first signal and a second signal are combined into a composite signal with a polarization beam combiner. For example, as shown in FIG. 3, the PBC 304 may be configured to combine/multiplex the first signal 301a and the second signal 301b into a composite signal 303 output via an output port 314. In embodiments, the PBC 304 may be configured to polarize the first signal 301a and the second signal 301b within the composite signal 303 in varying linear polarizations. For instance, the PBC 304 may generate the composite signal 303 including the first signal 301a and the second signal 301b such that the first signal 301a is polarized along a first linear direction, and the second signal 301b is polarized along a second linear polarization different from the first linear polarization.

In a step 604, a polarization of the composite signal is adjusted with a first quarter-wave plate to generate a circularly-polarized composite signal. For example, the first wave plate 310 may be configured to receive the linearly-polarized composite signal 303 and adjust a polarization of the linearly-polarized composite signal 303 to generate a circularly-polarized composite signal 303. In this regard, the wave plate 310 may include any wave plate or optical element known in the art configured to convert linear polarization into circular polarization including, but not limited to, a quarter-wave plate.

In a step 606, the circularly-polarized composite signal is transmitted with a communicative coupling. For example, the circularly-polarized composite signal 303 may then be transmitted through a circular polarization-maintaining communicative coupling 306 (CPM communicative coupling 306). It is noted herein that the CPM communicative coupling 306 may include any communicative coupling configured to transmit signals while maintaining a circular polarization of the transmitted signals. For example, the CPM communicative coupling 306 may include a CPM fiber 306. For instance, the CPM fiber 306 may include a spun CPM fiber 306.

In a step 608, a polarization of the circularly-polarized composite signal is adjusted with a second quarter-wave plate to generate a linearly-polarized composite signal. For example, the second wave plate 312 may be configured to receive the circularly-polarized composite signal 303 and adjust a polarization of the circularly-polarized composite signal 303 to generate a linearly-polarized composite signal 303.

In a step 610, the linearly-polarized composite signal is split into the first signal with a first linear polarization and the second signal with a second linear polarization with a polarization beam splitter. For example, the PBS 308 may be configured to receive the linearly-polarized composite signal 303 via a first input port 324 and split (e.g., de-multiplex) the received linearly-polarized composite signal 303 into the first signal 301a and the second signal 301b. Accordingly, the PBS 308 may be configured to transmit the first signal 301a via a first output port 326a, and may be further configured to transmit the second signal 301b via a second output port 326b.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A system for transmitting signals using circular polarization division multiplexing, comprising:
a polarization beam combiner (304) configured to combine a first signal (301a) and a second signal (301b) into a composite signal (303), wherein the composite signal includes the first signal polarized along a first linear polarization, and the second signal polarized along a second linear polarization;
a first wave plate (310) configured to receive the composite signal from the polarization beam combiner and adjust a polarization of the composite signal to generate a circularly-polarized composite signal;
a communicative coupling (306) configured to transmit the circularly-polarized composite signal;
a second wave plate (312) configured to receive the circularly-polarized composite signal and adjust a polarization of the circularly-polarized composite signal to generate a linearly-polarized composite signal; and
a polarization beam splitter (308) configured to receive the linearly-polarized composite signal via a first input port, transmit the first signal via a first output line, and transmit the second signal via a second output line.

2. The system of Claim 1, wherein combining a first signal and a second signal into a composite signal comprises:
receiving the first signal via a first input port (302a);
receiving the second signal via a second input port (302b); and
transmitting the composite signal via an output port (314).

3. The system of Claim 1 or 2, wherein the second linear polarization is orthogonal to the first linear polarization.

4. The system of any preceding Claim, wherein the circularly-polarized composite signal includes the first signal polarized along a first circular polarization, and the second signal polarized along a second circular polarization different from the first circular polarization;

5. The system of Claim 4, wherein the second circular polarization is orthogonal to the first circular polarization.

6. The system of any preceding Claim, wherein adjusting a polarization of the circularly-polarized composite signal to generate a linearly-polarized composite signal comprises:
adjusting a polarization of the first signal to polarize the first signal along a third linear polarization;
adjusting a polarization of the second signal to polarize the first signal along a fourth linear polarization.

7. The system of Claim 6, wherein the fourth linear polarization is orthogonal to the third linear polarization, and wherein the third linear polarization is equivalent to the first linear polarization, and the fourth linear polarization is equivalent to the second linear polarization.

8. The system of any preceding Claim, further comprising:
a first collimator (316) configured to receive the composite signal and direct the composite signal to the first wave plate; and
a second collimator (318) configured to receive the circularly-polarized composite signal and direct the circularly-polarized composite signal to the second wave plate.

9. The system of any preceding Claim, wherein at least one of the polarization beam combiner or the polarization beam splitter comprise a passive device.

10. The system of any preceding Claim, wherein the fiber comprises a circular polarization-maintaining fiber.

11. The system of Claim 10, wherein the fiber comprises a spun circular polarization-maintaining fiber.

12. The system of any preceding Claim, wherein at least one of the first signal and the second signal is a pulsed signal.

13. The system of any preceding Claim, wherein at least one of the first wave plate or the second wave plate comprises a quarter wave plate.

14. The system of any preceding Claim, wherein at least one of the first signal or the second signal comprises a continuous wave, CW, signal.

15. A method for transmitting signals using circular polarization division multiplexing, comprising:
combining a first signal (301a) and a second signal (301b) into a composite signal (303) with a polarization beam combiner (304);
adjusting, with a first quarter-wave plate (310), a polarization of the composite signal to generate a circularly-polarized composite signal;
transmitting the circularly-polarized composite signal with a communicative coupling ((306);
adjusting, with a second quarter-wave plate (312), a polarization of the circularly-polarized composite signal to generate a linearly-polarized composite signal; and
splitting the linearly-polarized composite signal into the first signal with a first linear polarization and the second signal with a second linear polarization with a polarization beam splitter (308).
